# EUROPÄISCHE PATENTANMELDUNG

(11) **EP 0 658 526 A1**
(43) Veröffentlichungstag der Anmeldung: **21.06.1995**
(21) Anmeldenummer: 94119694.1
(22) Anmeldetag: 10.12.1994
(51) Int. Cl.: C04B 7/24, C04B 14/40

(54) **Verfahren zur Herstellung von asbestfreiem abbindefähigem Material**

(30) Priorität: 17.12.1993 DE 4343170
(71) Anmelder: Solvay Umweltchemie GmbH, D-30173 Hannover (DE); Solvay Fluor und Derivate GmbH, D-30173 Hannover (DE)
(72) Erfinder: Swindersky, Hans-Walter, Dr., D-30175 Hannover (DE); Legat, Werner, Dr., D-30657 Hannover (DE); Becker, Andreas, D-29227 Celle (DE); Born, Thomas, D-31188 Holle (DE)
(74) Vertreter: Lauer, Dieter, Dr.

(57) **Zusammenfassung**

Asbestzement oder die bei seiner Zersetzung anfallenden Rückstände wurden bislang deponiert. Die Erfindung schlägt vor, Asbestzement unter Verwendung von einem Sinterhilfsmittel ausgewählt aus der Gruppe umfassend CaF₂ und komplexer Aluminiumfluoride bei 800 bis 1.200 °C einem Sinterungsprozeß zu unterwerfen, beispielsweise im Rahmen der Zementproduktion. Derart behandelter Asbestzement braucht nicht mehr deponiert zu werden, sondern wird dabei in asbestfreies abbindefähiges Material umgewandelt.

## Beschreibung

Die Erfindung bezieht sich auf ein Verfahren zur Herstellung von asbestfreiem, hydraulisch abbindefähigem Material unter Verwendung von Asbestzement.

Serpentin- und Amphibolasbest in Form von Asbestzement weist bekanntermaßen gesundheitsgefärdende Eigenschaften auf. Asbestzement wurde viele Jahre als preisgünstiger Werkstoff in der Bauindustrie, z. B. als Verkleidungsmaterial und als Dachbedeckungsmaterial, verarbeitet (Eternit und Fulgurit). Es ist schwierig, die riesige Menge (geschätzt werden 25 Mio. Tonnen an Asbestzement in Deutschland) gefahrlos zu deponieren. Die deutsche Patentanmeldung DE-OS 40 27 844 beschreibt ein Verfahren zur Zersetzung von Asbest. Dabei wird der Asbest in zerkleinerter Form mit Fluor enthaltenden anorganischen Säuren oder entsprechenden Alkali- oder Ammoniumsalzen vermischt und, gegebenenfalls unter Erhitzen, zersetzt. Das zersetzte Material ist deponierfähig. Die Europäische Patentanmeldung EP-A-0 545 850 beschreibt die Verwendung von Rückständen der Asbestzersetzung als Zuschlagstoff für die Zementherstellung.

Die vorliegende Erfindung hat sich zur Aufgabe gesetzt, ein noch einfacher durchzuführendes Verfahren anzugeben, mit dem die bei der Zersetzung von Asbestzement anfallenden zu deponierenden Rückstände verringert werden können. Die Aufgabe wird durch das erfindungsgemäße Verfahren gelöst.

Das erfindungsgemäße Verfahren sieht die Herstellung von abbindefähigem Material unter Brennen einer Rohstoffmischung vor, welche Asbestzement sowie ein Sinterhilfsmittel ausgewählt aus der Gruppe umfassend CaF₂ und die komplexen Aluminiumfluoride AlF₃·3H₂O, Chiolith (Na₅Al₃F₁₄), Kryolith (Na₃AlF₆), Kaliumfluoraluminat (KAlF₄, K₂AlF₅, K₃AlF₆) oder ein Hydrat davon, umfaßt, wobei man die Rohstoffmischung bei einer Temperatur von 800 bis 1.200 °C unter Bildung eines asbestfreien, abbindefähigen Materials brennt. Bevorzugt verwendet man komplexe Aluminiumfluoride, gegebenenfalls zusätzlich zu CaF₂, als Sinterhilfsmittel.

Es ist durchaus möglich, eine Rohstoffmischung zu brennen, die aus Asbestzement und einem oder mehreren der genannten Sinterhilfsmittel besteht. Diese Rohstoffmischung aus Asbestzement und Sinterhilfsmittel enthält dann 0,5 bis 99,5 Gew.-%, vorzugsweise 1 bis 50 Gew.-%, insbesondere 1 bis 10 Gew.-% an Sinterhilfsmittel. Der Rest auf 100 Gew.-% ist Asbestzement. Es kann zweckmäßig sein, den Asbestzement und eines oder mehrere der genannten Sinterhilfsmittel als Zuschlagsstoffe einer Rohstoffmischung zuzusetzen, wie sie üblicherweise zur Herstellung von Zement verwendet wird. Übliche Rohstoffe für die Zementherstellung umfassen Kalkstein, Ton, Kalkmergel, Tonmergel und andere bekannte Rohstoffe. Der Asbestzement ist dann vorzugsweise in einer Menge von 0,5 bis 98 Gew.-%, bezogen auf das Gesamtgewicht der brennfertigen Rohstoffmischung enthalten. Das Sinterhilfsmittel ist in einer die Sinterungstemperatur herabsetzenden Menge, vorzugsweise in einer Menge von 0,5 bis 99 Gew.-%, vorzugsweise 1 bis 50 Gew.-%, insbesondere 1 bis 10 Gew.-% bezogen auf das Gesamtgewicht der Rohstoffmischung enthalten. Den Rest auf 100 Gew.-% stellen Zementherstellungsrohstoffe dar. Selbstverständlich kann man die Kennzahlen der Rohstoffe (Kalkstandard, Silikatmodul und Tonerdemodul) wie gewünscht einstellen.

Es empfiehlt sich übrigens, den Asbestzement vor dem Brennen in kleinere Partikel zu überführen, z. B. durch Schreddern und Mahlen.

Die Rohstoffmischung wird dann in üblicher Weise gesintert, bei Temperaturen zwischen etwa 800 und 1.200 °C. Besonders geeignet sind Drehrohröfen.

Es wurde festgestellt, daß die Sintertemperatur der Rohstoffmischung erheblich herabgesetzt werden kann. Gleichzeitig wird beim erfindungsgemäßen Verfahren durch den Aluminiumgehalt der bevorzugt verwendeten komplexen Aluminiumverbindungen der im Zement negativ wirkende Magnesiumgehalt kompensiert.

Das Verfahrensprodukt ist ein asbestfreies Material, das hydraulisch sehr gut abbindefähig ist und gute Festigkeiten erreicht.

Die folgenden Beispiele sollen die Erfindung weiter erläutern, ohne sie in ihrem Umfang einzuschränken.

### Beispiel 1 bis 6:

Allgemeine Versuchsdurchführung: 10 g zerkleinerter Asbestzement (Asbestfasern im Lichtmikroskop sichtbar) wurden mit dem Sinterhilfsmittel vermischt und 2 h auf 1100 °C erhitzt. Nach dem Abkühlen wurden die Proben aus dem Tiegel entnommen und zerkleinert.

| **Beispiel** | **Sinterhilfsmittel** |
|---|---|
| 1 | 0,5 g Na₃AlF₆ |
| 2 | 10 g Na₃AlF₆ |
| 3 | 1 g Gemisch aus KAlF₄/K₃AlF₆¹⁾ |
| 4 | 1 g CaF₂ |
| 5 | 1 g AlF₃ · 3H₂O |
| 6 | 1 g Na₅ Al₃F₁₄ |

| | |
|---|---|
| ¹⁾Handelsprodukt Nocolok™ der Solvay Fluor und Derivate GmbH, Hannover | |

Eine Überprüfung der zerkleinerten Proben nach der Behandlung im Lichtmikroskop ergab keinen Anhaltspunkt für das Vorliegen von Asbestfasern.

### Beispiel 7:

10 g zerkleinerter Asbestzement, 2 g CaF₂ und 10 g einer Zementrohstoffmischung werden vermischt und 2 h lang auf 1100°C erhitzt.
Eine Überprüfung von zerkleinerten Proben des erhaltenen Zements im Lichtmikroskop ergab keinen Anhaltspunkt für das Vorliegen von Asbestfasern.

## Patentansprüche

1. Verfahren zur Herstellung von abbindefähigem Material unter Brennen einer Rohstoffmischung umfassend Asbestzement sowie ein Sinterhilfsmittel ausgewählt aus der Gruppe umfassend CaF₂ und die komplexen Aluminiumfluoride AlF₃·3H₂O, Chiolith (Na₅Al₃F₁₄), Kryolith (Na₃AlF₆), Kaliumfluoraluminat (KAlF₄, K₂AlF₅, K₃AlF₆) oder ein Hydrat davon, wobei man die Rohstoffmischung bei einer Temperatur von 800 bis 1.200 °C unter Bildung eines asbestfreien abbindefähigen Materials brennt.

2. Verfahren nach Anspruch 1, dadurch gekennzeichnet, daß die Rohstoffmischung aus 0,5 bis 99,5 Gew.-% Sinterhilfsmittel, Rest auf 100 Gew.-% Asbestzement besteht.

3. Verfahren nach Anspruch 1, dadurch gekennzeichnet, daß die Rohstoffmischung Asbestzement in einer Menge von 0,5 bis 98 Gew.-%, 0,5 bis 99 Gew.-% Sinterhilfsmittel, Rest auf 100 Gew.-% Zementherstellungsrohstoffe enthält.

4. Verfahren nach Anspruch 1, 2 oder 3, dadurch gekennzeichnet, daß CaF₂ oder ein komplexes Aluminiumfluorid in einer Menge von 0,5 bis 99,5 Gew.-%, vorzugsweise in einer Menge von 1 bis 50 Gew.-%, insbesondere 1 bis 10 Gew.-%, bezogen auf das Gesamtgewicht der Rohstoffmischung, als Sinterhilfsmittel zugesetzt wird.
